# EUROPÄISCHE PATENTSCHRIFT

(11) **EP 0 793 037 B1**
(45) Veröffentlichungstag und Bekanntmachung des Hinweises auf die Patenterteilung: **21.06.2000**
(21) Anmeldenummer: 97103046.5
(22) Anmeldetag: 25.02.1997
(51) Int. Cl.: F16H 7/08

(54) **Mechanischer Kettenspanner**
Mechanical chain tensioner
Tendeur de chaîne mécanique

(30) Priorität: 29.02.1996 DE 29603718 U
(43) Veröffentlichungstag der Anmeldung: 03.09.1997
(60) Teilanmeldung: 99114027.8
(73) Patentinhaber: JOH. WINKLHOFER & SÖHNE GmbH & Co KG, D-81369 München (DE)
(72) Erfinder: Schulze, Peter, 85375 Neufahrn (DE)
(74) Vertreter: Grünecker, Kinkeldey, Stockmair & Schwanhäusser Anwaltssozietät

(56) Entgegenhaltungen:
- EP-A- 0 195 945
- EP-A- 0 581 219

## Beschreibung

Die Erfindung betrifft einen mechanischen Kettenspanner der im Oberbegriff des Patentanspruchs 1 angegebenen Art.

Bei einem aus der Praxis bekannten mechanischen Kettenspanner dieser Art ist der Grundkörper ein Stanz-Biegeteil aus Blech konstanter Wandstärke. Der Grundkörper besitzt einen bogenförmigen Vertikalsteg, an dessen konkaver Unterseite aus Steifigkeitsgründen eine Querwand umgebogen ist. Zwei ausgestanzte Bohrungen bilden Befestigungsaufnahmen, in denen Hülsen vernietet oder in die Hülsen eingepreßt und verschweißt werden. Ein Widerlager für den Spannbügel ist ein in den Steg eingenieteter Lagerzapfen, auf den der Spannbügel in Zapfenlängsrichtung aufgeschoben und durch ein zusätzliches Sicherheitselement gegen Abziehen gesichert ist. Der Grundkörper ist in der Herstellung teuer und schwer. Er muß für jeden Befestigungsfall sozusagen maßgeschneidert sein, da die Abstände der Befestigungsaufnahmen für unterschiedliche Brennkraftmaschinentypen verschieden sind. Außerdem benötigt der Grundkörper eine Oberflächenbehandlung.

Bei einem-aus EP-A-0 581 219 bekannten Kettenspanner ist ein massiver, metallischer Träger für den Spannbügel vorgesehen.

Bei einem aus EP-A-0 195 945 bekannten Kettenspanner ist für den Kolben ein Führungsgehäuse im Kettenspannerträger vorgesehen, der aus Metall besteht. Die Spannschiene ist aus Kosten- und Gewichtsgründen mit Kunststoff ausgebildet.

Der Erfindung liegt die Aufgabe zugrunde, einen mechanischen Kettenspanner der eingangs genannten Art zu schaffen, der kostengünstiger herstellbar, universell einsetzbar und leichtgewichtig ist.

Die gestellte Aufgabe wird mit den Merkmalen des Anspruchs 1 gelöst.

Der gefüllte oder verstärkte Kunststoff, z.B. mit Fasern verstärkt, ist kostengünstig verarbeitbar und führt trotz gleicher Festigkeit und Steifigkeit zu deutlich reduziertem Gewicht. Beim Spritzgießen läßt sich die Form weitaus variabler gestalten als beim Stanzbiegen von Metallblech. Für die Funktion wichtige Gestaltungsmaßnahmen können einstückig realisiert werden. Eine Oberflächenbehandlung entfällt.

Gemäß Anspruch 2 werden durch die Integration der Quervorsprünge mit den Befestigungsbohrungen in den Grundkörper Arbeitsschritte, z.B. zum Anbringen von Befestigungsbuchsen, eingespart. Zur Kraftübertragung wird praktisch die gesamte Struktur des Grundkörpers herangezogen.

Gemäß Anspruch 3 ist der Grundkörper für zumindest zwei verschiedene Einsatzfälle wahlweise verwendbar, bei denen die Abstände zwischen den Befestigungsstellen differieren. Zum Befestigen wird dann die jeweils passende Befestigungsbohrung gewählt. Damit läßt sich der Grundkörper universell einsetzen.

Gemäß Anspruch 4 werden gegebenenfalls erforderliche Versteifungsbuchsen aus Metall bereits beim Spritzgießen des Grundkörpers eingebracht. Zusätzliche Arbeitsschritte zum Festlegen der Versteifungsbuchsen entfallen. Bei einer alternativen Ausführungsform können Versteifungsbuchsen eingepreßt werden.

Gemäß Anspruch 5 ist das Schwenklager für den Spannbügel Teil des Grundkörpers, was weitere Montageschritte und zusätzliches Zubehör einspart. Das Schwenklager wird beim Spritzgießen des Grundkörpers geformt. Bei einem einstückig eingeformten Schwenklager lassen sich ferner von vornherein günstige Kraftübertragungsverhältnisse sicherstellen.

Die Montage und Demontage des Spannbügels sind gemäß Anspruch 7 besonders bequem. Es entfällt die Notwendigkeit zusätzlicher Sicherungselemente für den Spannbügel, weil die Rastverbindung diese Aufgabe übernimmt.

Formentechnisch einfach ist die Ausführungsform gemäß Anspruch 8. Die Anordnung des Lagerbocks auf der Querwand gewährleistet günstige Kraftübertragungsverhältnisse, da der Spannbügel das Schwenklager auf Druck belastet, und nicht wie bei dem bekannten Grundkörper auf Biegung.

Herstellungs- und montagetechnisch günstig ist gemäß Anspruch 9, die symmetrische Anordnung der Lagerzapfen am Lagerbock. Dies schließt einseitige oder exzentrische Belastungsverhältnisse aus. Der Spannbügel läßt sich mit einem Handgriff anbringen bzw. demontieren. Zusätzliche möglich, zwei beabstandete Lagerböcke mit einem dazwischenliegenden Lagerzapfen anzuformen und das Lagerauge des Spannbügels mittels eines Einführschlitzes auf den Lagerzapfen aufzuklipsen. Die beiden Lagerböcke nehmen das Lagerauge zwischen sich auf und sorgen für die Zentrierung des Spannbügels am Grundkörper. Ferner ist es möglich, die oder den Lagerzapfen nicht bereits bei der Herstellung des Grundkörpers zu formen, sondern entweder den Lagerzapfen aus Metall in die Spritzgießform einzusetzen und zu umspritzen oder den Lagerzapfen nachträglich oder bei der Montage des Spannbügels einzupressen. Eine umgekehrte Bauweise kann Vorteile haben, d.h. den oder die Lagerzapfen am Spannbügel anzuordnen, und das grundkörperfeste Schwenklager nur als Rastaufnahme mit Lagerstelle auszubilden.

Gemäß Anspruch 10 gewährleistet der in das Lagerauge eingreifende Lagerbock die Zentrierung des Spannbügels gegen eine Verlagerung auf dem Lagerzapfen.

Anhand der Zeichnung wird eine Ausführungsform des Erfindungsgegenstandes erläutert. Es zeigen:

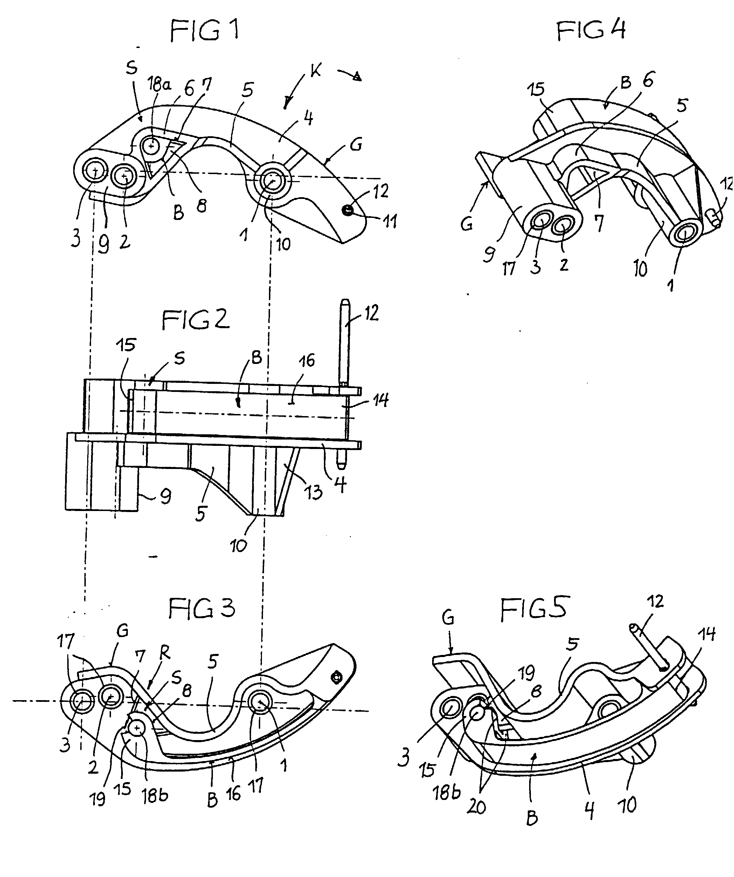

- Fig. 1: eine Vorderansicht eines mechanischen Kettenspanners,
- Fig. 2: eine Draufsicht des Kettenspanners,
- Fig. 3: eine Hinteransicht des Kettenspanners,
- Fig. 4: eine Perspektivansicht zu Fig. 1, und
- Fig. 5: eine Perspektivansicht zu Fig. 3.

Ein mechanischer Kettenspanner, insbesondere für eine Brennkraftmaschine, weist einen Grundkörper G aus im Spritzgußverfahren verarbeitetem, gefülltem oder verstärktem Kunststoff auf. Am Grundkörper G ist ein Spannbügel B anbringbar bzw. angebracht, der zur Zusammenarbeit mit einer nicht gezeigten Kette bestimmt ist. Der Grundkörper G ist ein einstückiger Kunststoff-Formteil mit in Quervorsprüngen 10, 9 geformten Befestigungsbohrungen 1, 2, 3;(zum Festlegen des Grundkörpers G). Die Quervorsprünge 9, 10 ragen von einem Mittelsteg 4 weg und sind mit diesem einstückig ausgebildet. Entlang der bogenförmig gekrümmten Unterseite des Mittelstegs 4 verlaufen an beiden Seiten Querwände 5, die an der Seite, an der die Quervorsprünge 9, 10 vorstehen, die Quervorsprünge 9, 10 aussteifend miteinander verbinden. Zusätzliche Versteifungsrippen 13 können vorgesehen sein. In einem Endbereich des Mittelsteges 4 ist eine Durchgangsbohrung 11 für ein Sicherungselement 12 geformt. Vom Quervorsprung 9 erstreckt sich eine bogenförmige geschwungene Querwand 6 bis zu Querwand 5, wobei zwischen den beiden Querwänden 5, 6 ein annähernd dreieckiges Fenster 7 begrenzt wird, das den Mittelsteg 4 durchsetzt. Auf der Querwand 5 ist an der den Quervorsprüngen 9, 10 abgewandten Seite des Mittelstegs 4 ein annähernd, z.B. dreieckiger Lagerbock 8 einstückig angeformt, dessen Wandstärke in etwa der Wandstärke des Mittelstegs 4 und/oder der Querwände 5, 6 entspricht. Am Lagerbock 8 sind bei dieser Ausführungsform zwei einstückig ausgeformte koaxiale Lagerzapfen 18a, 18b vorgesehen, die in etwa senkrecht zum Mittelsteg 4 verlaufen und jeweils von einer Seite des Lagerbocks 8 abstehen. Der Lagerbock 8 bildet mit den Lagerzapfen 18a, 18b ein Schwenklager S für den am Grundkörper G zu montierenden Spannbügel B, der zweckmäßigerweise ebenfalls ein Kunststoff-Formteil ist, allerdings aus einem nicht gefüllten, gleitfreudigen und verschleißfesten Kunststoff mit federnden Eigenschaften. Der Spannbügel B ist mit dem Grundkörper G über eine lösbare Rastverbindung R verbunden (Fig. 3 und 5) und wird durch den Lagerbock 8 in Achsrichtung der Lagerzapfen 18a, 18b zentriert.

Der Spannbügel B weist ein Ende 14 auf, das mittels des Sicherungselementes 12 zur Montage oder Demontage des Kettenspanners u.a. am Mittelsteg 4 festlegbar ist. Das andere Ende des Spannbügels B ist als Lagerauge 15 ausgebildet und am Schwenklager S schwenkbar befestigt. Der Rücken des gebogenen Spannbügels B definiert eine Gleitfläche 16.

Die Lagerzapfen 18a, 18b können einstückig mit dem Lagerbock 8 gespritzt sein. Es ist auch möglich, beim Spritzgießen oder nachträglich einen metallischen Lagerzapfen einzusetzen. Das Lagerauge 15 ist gabelartig ausgebildet (Fig. 5), so daß der Lagerbock 8 zwischen Seitenwände 20 des Lagerauges 15 eingreift und die Zentrierung bewirkt. Zum einfachen Aufklipsen des Spannbügels B sind im Lagerauge 15 Einführschlitze 19 ausgespart, durch die die Lagerzapfen 18a, 18b beim Aufdrükken des Lagerauges 15 in Lagerbohrungen einrasten.

In die Befestigungsbohrungen 1, 2, 3 sind Versteifungsbuchesn 17 aus Metall eingepreßt oder beim Herstellen des Grundkörpers in der Spritzgußform umspritzt. Zumindest der Quervorsprung 9 enthält mindestens zwei, vorzugsweise nahe benachbarte, Befestigungsbohrungen 2, 3, so daß sich ein und derselbe Grundkörper G wahlweise unter Nutzen der Befestigungsbohrung 1 und der Befestigungsbohrung 2 oder der Befestigungsbohrung 3 festlegen läßt. Es wäre denkbar, auch den Quervorsprung 10 mit zwei Befestigungsbohrungen auszustatten. Es könnten in jedem Quervorsprung 9, 10 auch mehr als zwei Befestigungsbohrungen vorgesehen sein.

Durch die sich beiderseits des Mittelstegs 4 erstreckenden Querwände 5 und die einstückig angeformten Quervorsprünge 9, 10, gegebenenfalls mit Versteifungsrippen 13, ist der Grundkörper G bei geringem Gewicht sehr gestaltfest. Das an der Querwand 5 angeformte Schwenklager S sichert eine günstige Kraftübertragung, weil der parallel zur Ebene des Mittelstegs 4 Druckkräfte ausübende Spannbügel B sich auf der Querwand 5 abstützt.

Es wäre auch denkbar, zwei beanstandete Lagerböcke 8 auf der Querwand 5 zu formen und diese durch einen dazwischenliegenden Lagerzapfen zu verbinden, so daß sich das Lagerauge 15 (in durchgehender Ausbildung ohen Gabelform) mittels eines Einführschlitzes 19 auf den Lagerzapfen aufklipsen läßt und zwischen den Lagerböcken zentriert wird.

## Patentansprüche

1. Mechanischer Kettenspanner, mit einem Befestigungsaufnahmen und Widerlager aufweisenden Formteil als Grundkörper (G), auf dem an den Widerlagern ein Spannbügel (B) anbringbar ist, **dadurch gekennzeichnet,** daß der Grundkörper (G) ein einstückiger Formteil aus einem gefüllten bzw. verstärkten, spritzgießfähigen Kunststoff ist.

2. Mechanischer Kettenspanner nach Anspruch 1, **dadurch gekennzeichnet,** daß der Grundkörper (G) einstückig eingeformte, seitlich vorstehende Quervorsprünge (9, 10) mit jeweils wenigstens einer Befestigungsbohrung (1, 2, 3) aufweist.

3. Mechanischer Kettenspanner nach Anspruch 2, **dadurch gekennzeichnet,** daß in den Befestigungsbohrungen (1, 2, 3) umspritzte Versteifungsbuchsen (17) aus Metall enthalten sind.

4. Mechanischer Kettenspanner nach Anspruch 2, **dadurch gekennzeichnet**, daß in den Befestigungsbohrungen (1, 2, 3) eingepreßte Versteifungsbuchsen (17) aus Metall enthalten sind.

5. Mechanischer Kettenspanner nach wenigstens einem der Ansprüche 1 bis 4, **dadurch gekennzeichnet,** daß der Grundkörper (G) ein einstückig angeformtes Schwenklager (S) als ein Widerlager für den Spannbügel (B) aufweist.

6. Mechanischer Kettenspanner nach Anspruch 1, **dadurch gekennzeichnet,** daß der Spannbügel (B) über eine Rastverbindung (R) lösbar und schwenkbar am Schwenklager (S) lagegesichert ist.

7. Mechanischer Kettenspanner nach Anspruch 6, **dadurch gekennzeichnet,** daß das Schwenklager (S) auf einer die Quervorsprünge (9, 10) verbindenden Querwand (5) angeordnet ist.

8. Mechanischer Kettenspanner nach den Ansprüchen 6 oder 7, **dadurch gekennzeichnet,** daß das Schwenklager (S) einen von der Querwand (5) hochstehenden Lagerbock (8) mit beidseitigen, koaxialen Lagerzapfen (18a, 18b) aufweist, daß am Spannbügel (B) ein gabelartig ausgespartes Lagerauge (15) mit Lagerbohrungen für die Lagerzapfen (18a, 18b) vorgesehen ist, und daß im Lagerauge (15) zu den Lagerbohrungen nach außen offene Einführschlitze (19) für die Lagerzapfen (18a, 18b) eingeformt sind.

9. Mechanischer Kettenspanner nach Anspruch 8, **dadurch gekennzeichnet,** daß das mit den Einführschlitzen (19) auf die Lagerzapfen (18a, 18b) aufgeklipste Lagerauge (15) an dem in das Lagerauge (15) greifenden Lagerbock (8) in Achsrichtung der Lagerzapfen (18a, 18b) zentriert ist.

## Claims

1. Mechanical chain tensioner, with a moulding as the main body (G) which comprises fixing receptacles and abutments and on which a clamping bracket (B) can be mounted on the abutments, characterised in that the main body (G) is a one-piece moulding made of a filled or reinforced plastic capable of injection moulding.

2. Mechanical chain tensioner according to claim 1, characterised in that the main body (G) comprises laterally protruding transverse projections (9, 10) integrally embedded by moulding, each with at least one fixing bore (1, 2, 3).

3. Mechanical chain tensioner according to claim 2, characterised in that in the fixing bores (1, 2, 3) are contained metal reinforcing bushes (17) surrounded by injection-moulded material.

4. Mechanical chain tensioner according to claim 2, characterised in that in the fixing bores (1, 2, 3) are contained metal reinforcing bushes (17) embedded by pressing in.

5. Mechanical chain tensioner according to one or more of claims 1 to 4, characterised in that the main body (G) comprises a pivot bearing (S) integrally attached by moulding as an abutment for the clamping bracket (B).

6. Mechanical chain tensioner according to claim 1, characterised in that the clamping bracket (3) is fixed in position on the pivot bearing (S) by a latch connection (R) so as to be releasable and pivotable.

7. Mechanical chain tensioner according to claim 6, characterised in that the pivot bearing (S) is arranged on a transverse wall (5) connecting the transverse projections (9, 10).

8. Mechanical chain tensioner according to claim 6 or 7, characterised in that the pivot bearing (S) comprises a bearing block (8) projecting upright from the transverse wall (5), with coaxial journals (18a, 18b) on both sides, in that on the clamping bracket (B) is provided a bearing eye (15) recessed in a fork shape wich bearing bores for the journals (18a, 18b), and in than in the bearing eye (15) are integrally formed insertion slots (19) for the journals (18a, 18b), which open outwards to the bearing bores.

9. Mechanical chain tensioner according to claim 8, characterised in that the bearing eye (15) which is clipped onto the journals (18a, 18b) by the insertion slots (19) is centred in the axial direction of the journals (18a, 18b) on the bearing block (8) engaging in the bearing eye (15).

## Revendications

1. Tendeur de chaîne mécanique comportant une pièce moulée possédant un logement de fixation et une butée, en tant que corps de base (G), sur lequel un étrier de serrage (B) peut être appliqué contre la butée, caractérisé en ce que le corps de base (G) est une pièce moulée monobloc formée d'une matière plastique remplie ou renforcée, apte à être moulée par injection.

2. Tendeur de chaîne mécanique selon la revendication 1, caractérisé en ce que le corps de base (G) comporte des parties saillantes transversales (9,10) qui sont formées d'un seul tenant, font saillie latéralement et comportent chacune au moins un perçage de fixation (1,2,3).

3. Tendeur de chaîne mécanique selon la revendication 2, caractérisé en ce que des douilles de renfort (17) qui sont formées d'un métal et sont moulées par injection, sont logées dans les perçages de fixation (1,2,3).

4. Tendeur de chaîne mécanique selon la revendication 2, caractérisé en ce que des douilles de renfort (17), qui sont métalliques et sont insérées à force, sont logées dans les perçages de fixation (1,2,3).

5. Tendeur de chaîne mécanique selon au moins l'une des revendications 1 à 4, caractérisé en ce que le corps de base (G) comporte un palier pivotant (S) formé d'un seul tenant et agencé en tant que butée pour l'étrier de serrage (B).

6. Tendeur de chaîne mécanique selon la revendication 1, caractérisé en ce que l'étrier de serrage (B) est fixé en position sur le palier pivotant (S) de manière à être amovible et à pouvoir tourner, au moyen d'un système de liaison à encliquetage (R).

7. Tendeur de chaîne mécanique selon la revendication 6, caractérisé en ce que le palier pivotant (S) est disposé sur une paroi transversale (5) qui relie les parties saillantes transversales (9,10).

8. Tendeur de chaîne mécanique selon les revendications 6 ou 7, caractérisé en ce que le palier pivotant (S) possède un bloc de palier (8), qui s'étend vers le haut à partir de la paroi transversale (5) et comporte des tourillons coaxiaux (18a,18b) situés des deux côtés, qu'un oeillet de palier (15) évidé en forme de fourche et comportant des alésages de palier pour les tourillons (18a,18b) est prévu sur l'étrier de serrage (B) et que des fentes d'introduction (19), ouvertes vers l'extérieur en direction des alésages de palier, pour les tourillons (18a,18b) sont formés dans l'oeillet de palier (15).

9. Tendeur de chaîne mécanique selon la revendication 8, caractérisé en ce que l'oeillet de palier (15), qui est encliqueté au moyen des fentes de guidage (19) sur les tourillons (18a,18b), est centré dans la direction d'axe des tourillons (18a,18b), sur le bloc de palier (8) qui s'engage dans l'oeillet de palier (15).
